Europäisches Patentamt

**European Patent Office**

Office européen des brevets

(11) Veröffentlichungsnummer: **0 120 996**
**B1**

(12) **EUROPÄISCHE PATENTSCHRIFT**

(45) Veröffentlichungstag der Patentschrift:
27.08.86

(51) Int. Cl.⁴: **B 65 G 21/06**

(21) Anmeldenummer: 83112343.5

(22) Anmeldetag: 08.12.83

(54) **Fördervorrichtung.**

(30) Priorität: **29.03.83 CH 1727/83**

(43) Veröffentlichungstag der Anmeldung:
**10.10.84 Patentblatt 84/41**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**EP - A - 0 036 958**
**WO - A - 81/00244**
**DE - B - 2 713 223**
**FR - A - 2 074 382**
**GB - A - 2 069 442**
**US - A - 3 605 994**
**US - A - 3 825 108**

**THE ENGINEER, Band 230, Nr. 5965, 21. Mai 1970, Seite 55, Morgan Grampian Ltd., London, GB; "Conveyors with one-piece extruded side members"**
**Idem.**

(73) Patentinhaber: **Montech AG, Gewerbestrasse 12, CH-4552 Derendingen (CH)**

(72) Erfinder: **Trenner, Albrecht, Kronmattstrasse 15, CH-4513 Langendorf (CH)**
Erfinder: **Kurt, Hans-Ulrich, Schönmattstrasse 205, CH-4554 Etziken (CH)**

(74) Vertreter: **Fiedler, Otto Karl, Dipl.-Ing., Hug Interlizenz AG Alte Zürcherstrasse 49, CH-8903 Birmensdorf (CH)**

## Beschreibung

Die vorliegende Erfindung bezieht sich auf eine Fördervorrichtung nach dem Oberbegriff des Patentanspruches 1.

Solche Fördervorrichtungen sind z.B. aus der US-A-3 825 108 und der EP-A-0 036 958 bekannt und finden zahlreiche Verwendung in Industriebetrieben der verschiedensten Art zur Förderung, Verteilung bzw. zum Transport insbesondere von Stückgütern im weitesten Sinne, z.B. von einer Be- oder Verarbeitungsstelle zur anderen oder zum Abtransport von einer Be- bzw. Verarbeitungsstelle zu einem Zwischen- oder Endlager bzw. zu einer Verpackungsstelle.

Im Zug der fortschreitenden Rationalisierung von Fertigungs- bzw. Verarbeitungsabläufen erlangen solche Fördervorrichtungen eine immer grössere Bedeutung, werden also vermehrt zum Weitertransport von Stückgütern eingesetzt. Dies hat aber zur Folge, dass individuell angepasste Lösungen verlangt werden, welche kostengünstig realisiert werden müssen, um solche Fördervorrichtungen vermehrt auch bei vergleichsweise kleinen Transportwegen bzw. unter besonderen Platzverhältnissen einsetzen zu können.

Die bekannte Fördervorrichtung gemäss der EP-A-0 036 958 bedarf in solchen Fällen einer zeit- und arbeitsintensiven Sonderanfertigung, um die individuellen Ansprüche des Benützers optimal erfüllen zu können. Insbesondere die Anpassung dieser Fördervorrichtung an vorgegebene Längenanforderungen wie auch die Berücksichtigung der Platzverhältnisse in der Umgebung der Vorrichtung sowie die Erfüllung von Sonderwünschen bezüglich Anbringung von Hilfseinrichtungen wie Endschalter, Zähleinrichtungen und dgl. hat dazu geführt, dass solche optimierten Fördervorrichtungen nur unter Einsatz von vergleichsweise viel Handarbeit, demzufolge nur zu relativ hohen Kosten gebaut und installiert werden konnten. Auch nachträgliche Änderungen an einer solchen Fördervorrichtung, z.B. infolge Anpassung an veränderte Produktions- oder Bearbeitungsabläufe, sind nur mit grossem Aufwand an Fachpersonal und Arbeitszeit durchzuführen.

Die Fördervorrichtung gemäss der US-A-3 825 108 vermag zwar einigermassen dem Vorteil einer verhältnismässig einfachen Anpassbarkeit an unterschiedliche Bedürfnisse hinsichtlich der Länge zu bieten, doch ist die universelle Verwendbarkeit nicht mehr gewährleistet, da im Bereich der Enden, d.h. gerade dort, wo es am erwünschtesten ist, keine Zusatzeinrichtungen wie Endschalter, Zähler oder dgl. angeordnet werden können.

Es ist eine Aufgabe der vorliegenden Erfindung, eine Fördervorrichtung der gattungsgemässen Art so auszugestalten, dass die vorstehend aufgezählten Nachteile des Standes der Technik nicht mehr vorhanden sind, d.h. eine Fördervorrichtung zu schaffen, die auf einfachste Art und Weise an individuelle Bedürfnisse optimal anpassbar ist, ohne dass zeit- und kostenintensive Sonderanfertigungen bzw. -anpassungen erforderlich wären. Im speziellen soll eine Fördervorrichtung geschaffen werden, die nach Art eines «Baukastens» die überwiegende Mehrzahl der Ansprüche eines Benutzers zu erfüllen vermag, wobei gleichzeitig eine optimale Zuverlässigkeit der Funktion einerseits und die Möglichkeit einer Anpassung an veränderte Gegebenheiten andererseits gewährleistet sein soll.

Gemäss der Erfindung wird dies bei einer Fördervorrichtung der eingangs genannten Art durch die Merkmale des Kennzeichens des Patentanspruches 1 erreicht.

Durch die Verwendung eines einheitlichen, einfachen, U-förmigen Profils als Stützorgan, welches wie im Kennzeichen des Anspruches 1 beschrieben ausgebildet ist, können folgende Vorteile erzielt werden:

— Beim Hersteller vorrätige Profilabschnitte können auf die genau erforderliche Länge zugeschnitten und montagefertig vorbereitet werden. Dadurch ist die Möglichkeit geschaffen, standardmässige Endabschnitte vorzusehen, die an einem auf die erforderliche Länge zugeschnittenen Mittelabschnitt angesetzt werden, um eine Fördervorrichtung der gewünschten Länge zusammenzustellen:

— In die oberseitigen Randnuten können Randprofile eingesteckt werden, um die effektive Förderbahnbreite genau einem Sollmass anzupassen:

— In den seitlichen, T-förmigen Nuten können sämtliche Hilfseinrichtungen wie Antriebsaggregat, Anschläge, Endschalter, Zähleinrichtungen und dgl. bis zum Endbereich hin befestigt werden. Mit der Nut-Klemmbefestigung kann der für den einzelnen Anwendungsfall optimale Platz ausgewählt und gegebenenfalls später verändert werden, ohne dass eine Nachbearbeitung des Stützorgans erforderlich wäre.

Die Verbindung zwischen den Endabschnitten und dem Mittelabschnitt erfolgt durch die in die T-förmigen Seitennuten einschiebbaren, mit Gewinde und Klemmschrauben versehenen Verbindungslaschen. Dadurch ist zum einen eine zuverlässige, genau fluchtende Verbindung herstellbar, die jederzeit leicht wieder lösbar ist; zum anderen ist bei der Montage keinerlei Bearbeitung an den Profilabschnitten erforderlich.

Durch das Einstecken von Kunststoffprofilen in die beiden randseitigen Nuten in der Oberfläche des Tragorgans lässt sich bequem eine seitliche Begrenzung der effektiven Förderbahnbreite erreichen. Bei Verwendung von unterschiedlich breiten und/oder unterschiedlich geforten Randprofilen kann zudem eine Anpassung der Förderbahn an besondere Bedürfnisse erreicht werden. Damit das Randprofil in der Nut sicher verankert ist, kann zumindest eine Seitenwand der randseitigen Nuten gegenüber der Längsmittelebene des Profilkörpers im Sinne einer Verengung der Nutenöffnung geneigt angeordnet sein. Ein sicherer Sitz ergibt sich ausserdem dadurch, wenn das Randprofil mit einem gegen unten abstehenden, im Querschnitt zumindest annähernd dem Nutenquerschnitt entsprechenden, in die randseitigen Nuten einrastbaren Fortsatz versehen ist.

Als geeignet können sich Randprofile aus einem abriebfesten, elastischen Kunststoff mit geringem Reibungskoeffizienten, vorzugsweise aus Polyamid, erweisen.

Die beiden Profilendabschnitte sind vorzugsweise einerends an ihren Schenkeln mit schlitzartigen Ausnehmungen versehen, in welchen die Achsen der Umlenkrollen verschiebbar und feststellbar aufgenommen sind. Eine Ausrichtung der Achse der Umlenkrolle gegenüber der Profillängsachse ist so bequem möglich, um einen geraden Lauf des Förderbandes zu gewährleisten. Mit Vorteil fluchtet die Umfangsfläche der Umlenkrolle zumindest annähernd mit der endseitigen Stirnfläche der Profilendabschnitte; damit ist ein nahtloses Aneinanderreihen mehrerer solcher Fördervorrichtungen möglich.

Das Antriebsaggregat umfasst zweckmässigerweise einen Antriebsmotor mit Getriebe und zumindest eine verschiebbare Spannumlenkrolle für das Spannen des Förderbandes. Mit Vorteil ist das Antriebsaggregat von mindestens einem Lagerschild getragen, welcher bzw. welche verschiebbar und feststellbar in zumindest einer der beiden seitlichen, T-förmigen Nuten des Stützorgans, zweckmässigerweise am mittleren Profilabschnitt, befestigt ist bzw. sind. Dadurch lässt sich das gesamte Antriebsaggregat blockweise, unter Anpassung an die räumlichen Gegebenheiten am Standort der Fördervorrichtung, optimal am Stützorgan anbringen, ohne dass an diesem selbst irgendwelche Befestigungsbohrungen oder dgl. angebracht werden müssten.

Die beidseitig angebrachte, T-förmige Nut erlaubt es schliesslich, sämtliche benötigten Hilfseinrichtungen der Fördervorrichtung wie z.B. Endschalter, Anschläge, Lichtschranken usw. am optimalen Platz längs des Stützorgans anzubringen, wobei ohne weiteres die Möglichkeit einer nachträglichen Verschiebung, Ergänzung oder dgl. gegeben ist. Auch in diesem Fall sind keine gesonderten Befestigungsbohrungen am Stützorgan vorzusehen; vielmehr kann die Befestigung mit Ankerklemmschrauben erfolgen.

Nachstehend wird ein Ausführungsbeispiel der erfindungsgemässen Fördervorrichtung, unter Bezugnahme auf die beiliegenden Zeichnungen, näher beschrieben.

Im einzelnen zeigen:

Fig. 1 eine schematische Gesamtansicht der Fördervorrichtung von der Seite;

Fig. 2 eine schematische Gesamtansicht der Fördervorrichtung von oben;

Fig. 3 einen Querschnitt durch das Stützorgan;

Fig. 4 eine detaillierte Seitenansicht eines Endabschnittes der Fördervorrichtung;

Fig. 5 eine Ansicht des Endabschnittes von oben;

Fig. 6 eine schematische, teilweise geschnittene Seitenansicht eines Ausschnittes aus dem Mittelabschnitt mit daran angebrachtem Antriebsaggregat, und

Fig. 7 einen Schnitt durch ein Randprofil.

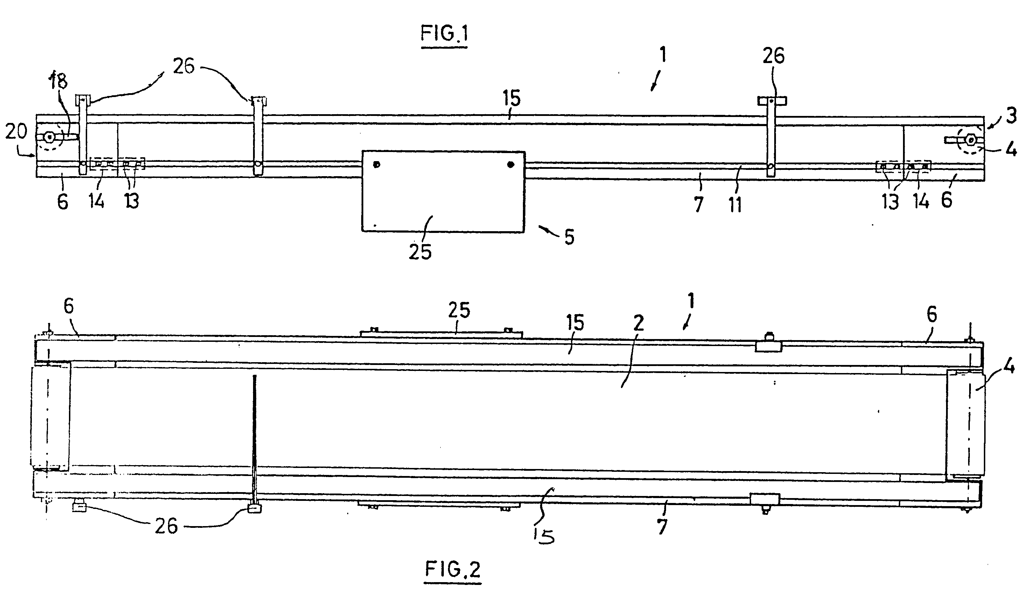

Aus den Figuren 1 und 2 ist der generelle Aufbau der gesamthaft mit 1 bezeichneten Fördervorrichtung zu sehen, in Fig. 1 in einer schematischen Seitenansicht, in Fig. 2 in einer schematischen Ansicht von oben. Die Fördervorrichtung 1 umfasst ein Stützorgan 3, welches einen Mittelabschnitt 7 und zwei mit diesem verbundene Endabschnitte 6 aufweist. Am freien Ende der beiden Endabschnitte 6 sind Umlenkrollen 4 drehbar gelagert, über welche ein Förderband 2 geführt ist. Letzteres erstreckt sich längs des Stützorgans 3, wobei der fordernde Trum des Förderbandes 2 entlang der Oberfläche des Stützorgans 3, auf dieser aufliegend, verläuft, während der Rücklauftrum des Förderbandes 2 innerhalb des Stützorgans 3 über ein Antriebsaggregat 5 verläuft; auf weitere Einzelheiten bezüglich der Förderbandführung wird im folgenden noch eingagangen werden.

Die Oberseite des Stützorgans 3 ist beidseitig mit einem Randprofil 15 versehen, welches die nutzbare Breite der Förderbahn begrenzt. Die Seitenflächen des Stützorgans 3 sind mit Längsnutzen 11 versehen, in welchen einerseits das Antriebsaggregat 5 sowie gegebenenfalls Hilfsorgane 26 wie Endschalter, Anschläge, Zähleinrichtungen und dgl. befestigt werden; andererseits dienen diese Nuten 11 ausserdem zur Aufnahme von Verbindungslaschen 14, mittels welcher die beiden Endabschnitte 6 mit dem Mittelabschnitt 7 verbunden sind. Auch diesbezüglich wird im folgenden noch auf nähere Einzelheiten eingegangen.

Wie in Fig. 1 schematisch angedeutet, umfasst das Antriebsaggregat 5 Lagerschilde 25, die in der Nut 11 des Stützorgans 3 befestigt sind und die zur Aufnahme eines Antriebsmotors 21, einer Getriebeanordnung 22, 23 und zumindest einer längs eines Schlittens 27 verschiebbaren und feststellbaren Spannumlenkrolle 24 für das Förderband 2 dienen.

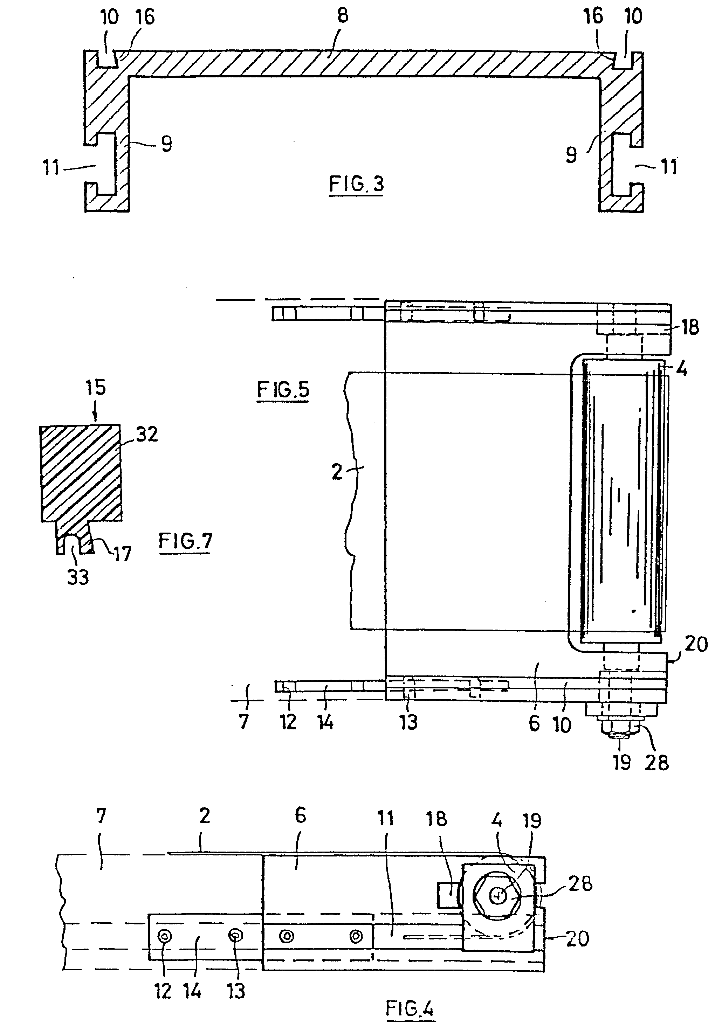

In der Fig. 3 ist ein Querschnitt durch das Stützorgan 3 dargestellt. Dieses wird durch ein Profil gebildet, welches vorzugsweise aus gegebenenfalls eloxiertem oder beschichtetem Aluminium besteht. Für bestimmte Anwendungszwecke ist auch eine Ausführung in Kunststoff oder rostfreiem Stahl denkbar. Das Profil besitzt sowohl beim Mittelabschnitt 7 als auch bei den Endabschnitten 6 identischen Querschnitt und setzt sich aus einem im wesentlichen ebenen, in Einbaulage oben liegenden Mittelteil 8 sowie aus zwei sich gegen unten vom Mittelteil 8 erstreckenden, kürzeren Schenkeln 9 zusammen. Somit ist das Profil im wesentlichen U-förmig, wobei die Wanddicke der Schenkel 9 im allgemeinen etwas grösser gewählt ist als die Dicke des Mittelteils 8.

Im Bereich der Ränder der Oberseite des Mittelteils 8 ist je eine Nut 10 vorgesehen, die zur Aufnahme des Randprofils 15 dient. Zumindest die eine Seitenwand 16 der randseitigen Nuten 10 ist gegenüber der Längsmittelebene des Profils in dem Sinne geneigt angeordnet, dass sich eine Verengung der Öffnung der Nuten 10 ergibt. Durch diese Ausbildung kann ein sicheres Einrasten und eine zuverlässige Verankerung des in die Nuten 10 einzusetzenden Randprofils 15 erreicht werden, wie im Zusammenhang mit Fig. 7 weiter unten noch näher erläutert werden wird.

Die Schenkel 9 sind an ihrer gegen die Profilaussenseite gerichteten Fläche mit je einer Nut 11 versehen, die im Querschnitt T-förmig ist. Diese beiden Nuten 11 erstrecken sich über die gesamte Länge des Stützorgans 3 und sind sowohl am Mittelabschnitt 7 als auch an den Endabschnitten 6 durchgehend vorgesehen. Sie dienen dazu, wie schon vorstehend erwähnt, einerseits das Antriebsaggregat 5 und andererseits die Hilfsorgane 26 aufzunehmen. Die Befestigung erfolgt dabei mittels Ankerklemmschrauben mit abgeflachtem Kopf, die in die Nut 11 eingeführt und um einen gewissen Betrag verdreht werden. Auf dem aus der Nut herausragenden Schraubenschaft kann dann in bekannter Weise das zu befestigende Element aufgesetzt und mit einer Mutter gesichert werden. Ein Lösen der Mutter gestattet dabei ein Verschieben der Schrauben entlang der Nut 11 und damit ein Verändernder Position des am Stützorgan 3 anzubringenden Elementes.

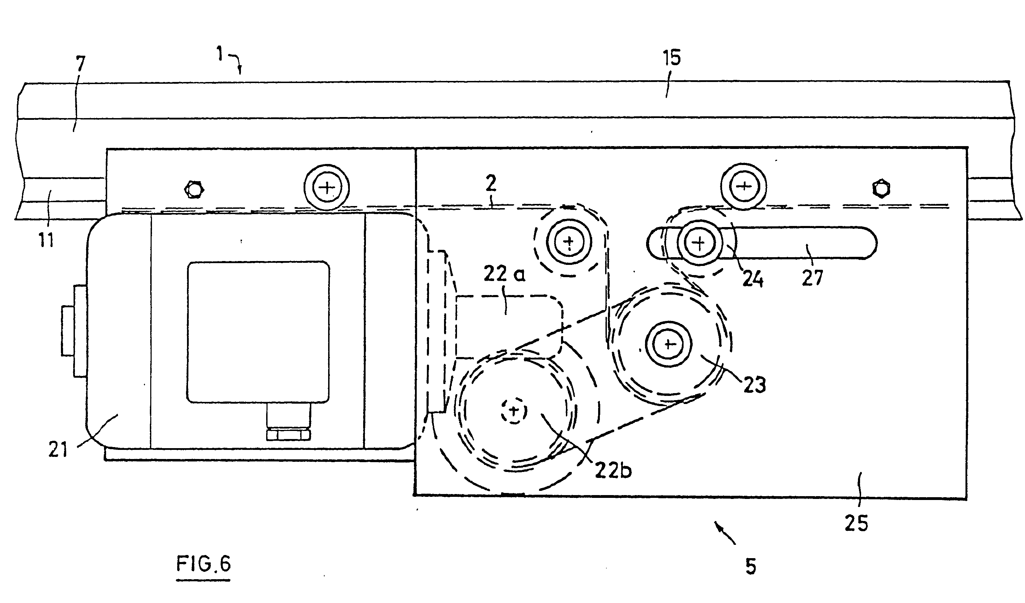

Ein weiterer Zweck der seitlichen, T-förmigen Nuten 11 liegt darin, eine einfache Möglichkeit zur Verbindung einerseits des Profilmittelabschnittes 7 mit den Profilendabschnitten 6 und andererseits von einzelnen, gesamten Fördervorrichtungen untereinander zu schaffen. Gemäss Fig. 4 bzw. 5 wird dies dadurch erreicht, dass Verbindungslaschen 14 vorgesehen sind, die in die Nut 11 eingeschoben werden und die mit Gewindebohrungen 12 und mit darin eingesetzten Klemmschrauben 13 versehen sind. Die eine Hälfte dieser Verbindungslaschen 14 befindet sich gemäss dem in Fig. 4 gezeigten Beispiel innerhalb der im Mittelabschnitt 7 befindlichen Nut 11, währenddem sich die andere Hälfte der Verbindungslasche 14 in die im Endabschnitt 6 ausgebildete Nut 11 erstreckt. So wird ein genaues Fluchten der Abschnitte 6 und 7 erreicht; die gegenseitige Arretierung erfolgt durch Anziehen der Klemmschrauben 13. In entsprechender Weise können die freien Enden von zwei Endabschnitten 6 benachbarter Fördervorrichtung 1 miteinander gekoppelt werden, wenn eine längere, aus mehreren, einzelnen Fördervorrichtungen 1 zusammengesetzte Förderbahn erstellt werden soll.

Dieser Zusammenstellungsmöglichkeit kommt auch die Ausbildung der Endabschnitte 6 gemäss Fig. 4 und 5 entgegen. Aus diesen Figuren ist zu entnehmen, dass die Endabschnitte 6 mit beidseitigen, schlitzartigen Ausnehmungen 18 versehen sind, in welchen die Achsen 19 der Umlenkrollen 4 verschiebbar gelagert sind. Zur Festsetzung der genauen Lage der Umlenkrolle 4 dient eine Mutter 28. So kann zum einen die Achse 19 der Umlenkrollen 4 gegenüber der Längsmittelachse des Stützorgans 3 ausgerichtet werden, um einen geraden Lauf des Förderbandes 2 zu gewährleisten; andererseits ist die Möglichkeit geschaffen, die Umlenkrolle 4 in einer solchen Lage zu positionieren, dass deren Umfangsfläche im wesentlichen mit der freien Stirnfläche 20 des Endabschnittes 6 fluchtet, keinesfalls jedoch über diese hervorsteht. Dies erleichtert das nahtlose Aneinanderfügen von einzelnen Fördervorrichtungen 1.

Aus der Fig. 6 ist eine beispielhafte Anordnung des Antriebsaggregates 5 ersichtlich. Wie schon im Zusammenhang mit den Fig. 1 und 2 beschrieben, kann das Antriebsaggregat 5 an zwei Lagerschilden 25 befestigt sein, von denen in Fig. 6 nur einer dargestellt ist und welche mit Schrauben 29 in der seitlichen Längsnut 11 des Stützorgans 3 verschiebbar und feststellbar verankert sind. Das Antriebsaggregat 5 umfasst einen Antriebsmotor 21, der über ein Schneckenradgetriebe 22a, 22b und über einen Triebriemen 30 ein Antriebsrad 23 in Rotation versetzt. Das Förderband 2, d.h. dessen Rücklauftrum wird über eine feste Umlenkrolle 31 um das Antriebsrad 23 herum und von diesem zu einer in einem Schlitz 27 verschiebbaren Spannumlenkrolle 24 geführt.

Durch diese Anordnung kann das Antriebsaggregat 5 an jeder beliebigen Stelle des Mittelabschnittes 7 des Stützorgans 3 befestigt werden, wobei zur Einstellung der gewünschten Bandspannung lediglich die Befestigung der Spannumlenkrolle 24 gelöst, diese verschieben und wieder arretiert werden muss.

Aus der Fig. 7 geht die Ausbildung eines beispielsweisen Randprofils 15 hervor. Dieses besitzt einen Profilkörper 32, dessen Höhe und Breite entsprechend den individuellen Anforderungen an die Fördervorrichtung 1 gewählt wird. Jedenfalls besitzt aber der Profilkörper 32 einen gegen unten abstehenden Fortsatz 17, der im Querschnitt entsprechend dem Querschnitt der randseitigen Nuten 10 in der Oberfläche des Mittelteils 8 des Stützorgans 3 ausgebildet ist. Eine mittig angebrachte Ausnehmung 33 im Fortsatz 17 erlaubt das elastische Zusammendrücken desselben und damit ein Einrastendes Randprofils 15 in die Nut 10.

Vorzugsweise besteht das Randprofil 15 aus einem elastischen, abriebfesten Kunststoff mit geringem Reibungskoeffizienten, vorzugsweise aus Polyamid. Gegebenenfalls kann sich das Randprofil 15 auch einstückig über mehrere, aneinandergereihte Fördervorrichtungen erstrecken.

Mit der vorgeschlagenen Fördervorrichtung ist ein System geschaffen, welches in optimaler Weise an besondere Anforderungen bezüglich Ausführung und Abmessungen anpassbar ist. Die Auswechselbarkeit der Randprofile 15 erlaubt dabei eine an das zu fördernde Produkt angepasste Begrenzung der effektiven Förderbandbreite, während die seitlichen, T-förmigen Nuten die Anbringung von Antriebsaggregat, Hilfsorganen und dgl. an frei wählbaren Stellen gestattet, ohne dass besondere Bearbeitungsoperationen am Stützorgan 3 auszuführen wären. Ausserdem können an der seitlichen Nut 11 weitere Elemente wie z.B. Kabelkanäle, Pressluftleitungen, elektrische Verbindungen usw. befestigt werden.

Das Zusammenkoppeln zwischen Mittelabschnitt und Endabschnitten einer Fördervorrichtung einerseits bzw. von einzelnen Fördervorrichtungen zu einer längerenFörderbahnstrecke andererseits erfolgt mit grosser Präzision und stossfrei fluchtend, was schliesslich der Betriebszuverlässigkeit und der Lebensdauer zugute kommt.

Selbstverständlich ist es gegebenenfalls möglich, mehrere Mittelabschnitte 7 zusammenzukoppeln und die freien Enden mit je einem Endabschnitt 6 zu versehen. Insbesondere für nachträgliche Verlängerungen der Förderbandstrecke ist diese Erweiterungsmöglichkeit von grossem Vorteil.

**Patentansprüche**

1. Fördervorrichtung (1), die eine entlang eines Stützprofils (6, 7) mit endseitig drehbar angebrachten Umlenkrollen (4) laufendes, durch ein Antriebsaggregat (5) angetriebenes Förderband (2) aufweist, wobei das Stützprofil einen vergleichsweise langen Profilmittelabschnitt (7) umfasst, an welchem beidseitig je ein vergleichsweise kurzes, an den freien Enden mit den Umlenkrollen (4) versehenes Endabschnittelement (6) lösbar befestigt ist, dadurch gekennzeichnet, dass sowohl der Profilmittelabschnitt (7) als auch die beiden Endabschnittelemente (6) durch im Querschnitt identische, U-förmige, einstükkige Profile gebildet sind, und dass diese U-förmigen Profile (6, 7) einen im wesentlichen ebenen, oberen Mittelsteg (8) mit beidseitig im Bereich des Randes angeordneten Nuten (10) sowie zwei senkrecht von der den Nuten (10) gegenüberliegenden Fläche des Mittelsteges (8) abstehende Schenkel (9) aufweisen, die an ihrer gegen die Profilaussenseite gerichteten Fläche mit im Querschnitt T-förmigen Nuten (11) versehen sind, wobei die Verbindung der Endabschnitte (6) mit dem Mittelabschnitt (7) durch in die T-förmigen Seitennuten (11) eingeschobene, mit Gewinde (12) und Klemmschrauben (13) versehene Verbindungslaschen (14) derart erfolgt, dass die randseitigen Nuten (10) der Endabschnitte (6) und des Mittelabschnittes (7) einerseits und die T-förmigen Seitennuten (11) der Endabschnitte (6) und des Mittelabschnittes (7) andererseits fluchten.

2. Fördervorrichtung nach Anspruch 1, dadurch gekennzeichnet, dass in die randseitigen Nuten (10) des Profilmittelteils (8) ein vorzugsweise aus Kunststoff bestehendes Randprofil (15) lösbar eingesteckt ist.

3. Fördervorrichtung nach Anspruch 2, dadurch gekennzeichnet, dass zumindest eine Seitenwand (16) der randseitigen Nuten (10) gegenüber der Längsmittelebene des Profilkörpers (6, 7) im Sinne einer Verengung der Nutenöffnung geneigt angeordnet ist.

4. Fördervorrichtung nach Anspruch 3, dadurch gekennzeichnet, dass das Randprofil (15) mit einem gegen unten abstehenden, im Querschnitt zumindest annähernd dem Nutenquerschnitt entsprechenden, in die randseitigen Nuten (10) einrastbaren Fortsatz (17) versehen ist.

5. Fördervorrichtung nach Anspruch 4, dadurch gekennzeichnet, dass das Randprofil (15) aus einem abriebfesten, elastischen Kunststoff mit geringem Reibungskoeffizienten, vorzugsweise aus Polyamid, besteht.

6. Fördervorrichtung nach einem der vorangehenden Ansprüche, dadurch gekennzeichnet, dass die beiden Profilendabschnitte (6) an ihren Schenkeln (9) mit schlitzartigen Ausnehmungen (18) versehen sind, in welchen die Achse (19) der Umlenkrollen (4) verschiebbar und feststellbar aufgenommen ist.

7. Fördervorrichtung nach Anspruch 6, dadurch gekennzeichnet, dass die Umfangsfläche der Umlenkrolle (4) mit der endseitigen Stirnfläche (20) des Profilendabschnittes (6) zumindest annähernd fluchtet.

8. Fördervorrichtung nach einem der vorangehenden Ansprüche, dadurch gekennzeichnet, dass das Antriebsaggregat (5) einen Antriebsmotor (21) mit Getriebe (22, 23) und zumindest eine verschiebbare Spannumlenkrolle (24) für das Spannen des Förderbandes (2) umfasst.

9. Fördervorrichtung nach Anspruch 8, dadurch gekennzeichnet, dass das Antriebsaggregat (5) durch mindestens einen Lagerschild (25) getragen ist, welcher seinerseits verschiebbar und feststellbar in zumindest einer der beiden seitlichen, T-förmigen Nuten (11) des Profilmittelabschnittes (7) befestigt ist.

10. Fördervorrichtung nach einem der vorangehenden Ansprüche, dadurch gekennzeichnet, dass sämtliche Hilfsorgane (26) der Fördervorrichtung (1) wie Endschalter, Anschläge, Lichtschranken und dgl. an mindestens einer der beiden seitlichen, T-förmigen Nuten (11) des Profilmittelabschnittes (7) und/oder des Profilendabschnittes (6) lösbar und feststellbar befestigt sind.

## Claims

1. Conveying device (1) which has a conveyor belt (2) which runs along a support profile (6, 7) with return pulleys (4) rotatably attached at the ends, and is driven by a drive unit (5), the support profile comprising a comparatively long profile middle section (7), to either end of which is detachably fixed a comparatively short end section element (6) provided at the free ends with the return pulleys (4), characterized in that both the profile middle section (7) and the two end section elements (6) are formed by U-shaped, one-piece profiles which are identical in cross-section, and in that these U-shaped profiles (6, 7) have a substantially flat, upper middle piece (8) with grooves (10) arranged on either side in the region of the edge and two legs (9) vertically projecting from the side of the middle piece (8) opposite the grooves (10), which legs are provided on their surface directed toward the outside of the profile with grooves (11) which are T-shaped in cross-section, the connection of the end sections (6) with the middle section (7) being made by means of connecting links (14), provided with thread (12) and clamping screws (13), pushed into the T-shaped side grooves (11) in such a way that the edge-sided grooves (10) of the end sections (6) and of the middle section (7) on the one hand and the T-shaped side grooves (11) of the end sections (6) and of the middle section (7) of the other hand are aligned.

2. Conveying device according to Claim 1, characterized in that an edge profile (15), preferably made of plastic, is detachably inserted into the edge-sided grooves (10) of the profile middle piece (8).

3. Conveying device according to Claim 2, characterized in that at least one side wall (16) of the edge-sided grooves (10) is arranged inclined with respect to the longitudinal mid-plane of the profile body (6, 7) in the sense of a narrowing of the groove opening.

4. Conveying device according to Claim 3, characterized in that the edge profile (15) is provided with a downward projecting extension (17) which corresponds in cross-section at least approximately to the groove cross-section and can be slipped into the edge-sided grooves (10).

5. Conveying device according to Claim 4, characterized in that the edge profile (15) consists of a wear-resistant, flexible plastic having a low coefficient of friction, preferably of polyamide.

6. Conveying device according to one of the preceding claims, characterized in that the two profile end sections (6) are provided at their legs (9) with slot-like recesses (18), in which the spindle (19) of the return pulleys (4) is displaceably and fixably accommodated.

7. Conveying device according to Claim 6, characterized in that the circumferential area of the return pulley (4) aligns at least approximately with the end-sided face (20) of the profile end section (6).

8. Conveying device according to one of the preceding claims, characterized in that the drive unit (5), comprises a drive motor (21) with transmission (22, 23) and at least one displaceable tension return pulley (24) for tensioning the conveyor belt (2).

9. Conveying device according to Claim 8, characterized in that the drive unit (5) is borne by at least one bearing plate (25) which, for its part, is displaceably and fixably secured in at least one of the two side, T-shaped grooves (11) of the profile middle section (7).

10. Conveying device according to one of the preceding claims, characterized in that all auxiliary elements (26) of the conveying device (1), such as mit switches, stops, light barriers and the like, are detachably and fixably secured in at least one of the two side, T-shaped grooves (11) of the profile middle section (7) and/or of the profile end section (6).

**Revendications**

1. Dispositif d'alimentation (1) qui présente une bande convoyeuse (2) entraînée par un mécanisme d'entraînement (5) le long d'un profil d'appui (6, 7) avec des rouleaux de renvoi (4) montés à rotation aux extrémités, le profil d'appui comportant un tronçon de profil central (7) relativement long aux deux côtés duquel sont fixés de manière détachable des éléments de tronçon d'extrémité (6), relativement courts, munis aux extrémités libres de rouleaux de renvoi (4), caractérisé par le fait qu'aussi bien le tronçon de profil central (7) que les deux éléments de tronçon d'extrémité (6) sont réalisés par des profilés d'un seul tenant de section identique en forme de U et que ces profilés en forme de U (6, 7) présentent une âme centrale supérieure sensiblement plane (8) comportant deux côtés des gorges (10) réalisées au voisinage du bord ainsi que deux ailes (9) s'étendant perpendiculairement depuis la surface de l'âme centrale (8) opposée aux gorges (10) et qui, dans leur surface dirigée vers le côté extérieur du profil, sont munis de gorges (11) de section en forme de T, la liaison des tronçons d'extrémité (6) avec le tronçon central (7) s'effectuant au moyen d'éclisses (14) enfoncées dans les gorges latérales en forme de T (11) et munies d'un filetage (12) et de vis de serrage (13) de telle sorte que les gorges (10) réalisées dans les bords des tronçons d'extrémité (6) et du tronçon central (7) d'une part et les gorges latérales en forme de T (11) des tronçons d'extrémité et du tronçon central (7) d'autre part sont alignées.

2. Dispositif convoyeur selon la revendication 1, caractérisé par le fait qu'un profilé de bord (15), constitué de préférence en matière plastique, est enfoncé de manière amovible dans les gorges (10) au niveau des bords de la partie centrale du profilé (8).

3. Dispositif convoyeur selon la revendication 2, caractérisé par le fait qu'au moins une paroi latérale (16) des gorges de bord (10) est inclinée par rapport au plan longitudinal central du corps profilé (6, 7) dans un sens réalisant un tétrécissement de l'ouverture de la gorge.

4. Dispositif convoyeur selon la revendication 3, caractérisé par le fait que le profilé de bord (15) est muni d'un prolongement (17) encliquetable dans les gorges de bord (10), orienté vers le bas, et correspondant en section au moins approximativement à la section transversale des gorges.

5. Dispositif convoyeur selon la revendication 4, caractérisé par le fait que le profilé de bord (15) est constitué d'une matière plastique élastique résistante au déchirement avec un faible coefficient de frottement, de préférence en polyamide.

6. Dispositif convoyeur selon l'une des revendications précédentes, caractérisé par le fait que les deux tronçons d'extrémité (6) sont munis sur leurs ailes (9) d'évidements (18) en forme de fentes dans lesquels sont reçus de manière déplaçable et réglable les axes (19) des rouleaux de renvoi (4).

7. Dispositif convoyeur selon la revendication 6, caractérisé par le fait que la surface périphérique des rouleaux de renvoi (4) est au moins approximativement alignée avec la surface frontale d'extrémité (20) du tronçon d'extrémité de profil (6).

8. Dispositif convoyeur selon l'une des revendications précédentes, caractérisé par le fait que le mécanisme d'entraînement (5) comporte un moteur d'entraînement (21) aves des engrenages (22, 23) et au moins un rouleau déviateur tendeur mobile pour tendre la bande convoyeuse (2).

9. Dispositif convoyeur selon la revendication 8, caractérisé par le fait que le mécanisme d'entraînement (5) est porté par au moins une plaque de montage (25) qui est montée déplaçable et réglable dans au moins l'une des deux gorges latérales (11) en forme de T du tronçon de profil central (7).

10. Dispositif convoyeur selon l'une des revendications précédentes, caractérisé par le fait que tous les organes auxiliaires (26) du dispositif convoyeur (1) tels que des interrupteurs de fin de course, des butées, des cellules photoélectriques et analogues sont fixés de manière démontable et réglable sur au moins l'une des deux gorges latérales en forme de T (11) du tronçon de profil central (7) et/ou du tronçon de profil d'extrémité (6).

FIG.1

FIG.2

0 120 996

FIG. 3

FIG.5

FIG.7

FIG.4

9

FIG.6